# EUROPEAN PATENT SPECIFICATION

(11) **EP 2 669 844 B1**
(45) Date of publication and mention of the grant of the patent: **05.09.2018**
(21) Application number: 13169323.6
(22) Date of filing: 27.05.2013
(51) Int. Cl.: G06K 9/00, G06T 7/00, G06K 9/20, G06T 7/593

(54) **Level Difference Recognition System Installed in Vehicle and Recognition Method executed by the Level Difference Recognition System**
In einem Fahrzeug installiertes Pegeldifferenzerkennungssystem und vom Pegeldifferenzerkennungssystem ausgeführtes Erkennungsverfahren
Système de reconnaissance de différence de niveau installé dans un véhicule et procédé de reconnaissance exécuté par le système de reconnaissance de différence de niveau

(30) Priority: 31.05.2012 JP 2012124008; 23.04.2013 JP 2013090497
(43) Date of publication of application: 04.12.2013
(73) Proprietor: Ricoh Company, Ltd., Tokyo 143-8555 (JP)
(72) Inventor: Ishigaki, Tomoko, Tokyo, 143-8555 (JP); Li, Xue, Tokyo, 143-8555 (JP)
(74) Representative: Schwabe - Sandmair - Marx

(56) References cited:
- WO-A1-2011/078300
- JP-A- 2000 331 148
- David Hanwell ET AL: "DETECTION OF LANE DEPARTURE ON HIGH-SPEED ROADS", International Conference on Pattern Recognition Applications and Methods (ICPRAM), 8 February 2012 (2012-02-08), pages 529-536, XP055141314, Retrieved from the Internet: URL:http://www.cs.bris.ac.uk/publications/ Papers/2001503.pdf [retrieved on 2014-09-18]

## Description

### BACKGROUND

### Technical Field

The present invention relates to a level recognition system installed in a vehicle to recognize a level difference area indicating a level difference on at least one side of a vehicle lane, and a level recognition method executed by the level recognition system.

### Related Art

At present, recognition systems, installed in vehicles, which recognize obstacles based on a captured image ahead of the vehicle have been commonly used for driver support systems such as adaptive cruise control (ACC), so as to reduce the burden on the driver. The driver support systems realize various functions having a break-control-and-alert function that the driver is alerted to take corrective action to avoid a collision or reduce the impact of the collision, a driving speed adjustment function to maintain a safe minimum distance between vehicles, and a straying lane prevention function to prevent the vehicle from straying into another lane.

As one vehicle-mounted recognition system, JP-2000-331148-A proposes an obstacle detection system to detect a side strip of a lane, on which a vehicle drives, in the road, based on a luminance image and a distance image (parallax image) showing an area ahead of a road acquired by multiple imaging devices. Before the side strip is detected, the obstacle detection system initially detects a white line (lane marker, lane border), which has significant characteristics in the image on the road, based on the luminance image showing the area ahead of the vehicle. Then, under conditions that the detected white line is parallel to the side strip (roadside), a candidate set of roadside level difference image areas is acquired based on the detected white line. Subsequently, the obstacle detection system detects a side strip of the vehicle lane for the vehicle in the candidate set of roadside level difference image areas positioned in an area at a similar distance from the vehicle to the white line.

In order to fulfill this function appropriately, it is important to recognize image areas showing various recognition targets (e.g., another vehicle, pedestrian, lane marker and manhole cover of road formations, pole, and guardrail, curb, and center median of side strip formations) positioned around the vehicle, to ascertain where the vehicle can drive and to recognize targets that should be avoided with a high degree of accuracy.

In general, the image area of the recognition targets is one whose luminance, color, and polarization properties are significantly different from those of the surrounding image area in the captured image. By extracting these differences in optical characteristics, the recognition target can be recognized with a high degree of accuracy.

For example, the contrast between a lane marker image area, such as a white line on the road (e.g., asphalt), and the surrounding image area (road image area) is high, thereby enabling the lane marker area to be recognized with a high degree of accuracy.

However, the contrast between a level difference image area showing the level difference such as the curb or the center median along the sides of the vehicle lane in which the vehicle is traveling and the road image area is low, and the other optical characteristics of the level difference image area often have fewer differences from those of the road image area. Therefore, it is difficult to recognize the level difference image area based solely on the difference in optical characteristics of that area from the surrounding image area with a high degree of accuracy.

At the same time, however, the ability to recognize the level difference image area showing the level difference along the sides of the road for the vehicle is useful in determining where the vehicle can go, and therefore it is preferable that these areas be recognized with a high degree of accuracy.

The level differences, such as curb or center median, are parallel to the lane marker such as white line along the sides of the vehicle lane of the vehicle. Focusing attention on this characteristics, similarly to the method of detecting the side strip in the above-described example, by using a recognition method that recognizes the level difference based on the lane marker image area whose recognizeability is high, the recognizeability of the level difference can be improved, compared to attempts to recognize the level difference based solely on the difference in optical characteristics of the level difference from the surrounding image area.

However, since this method is only possible under the presumption that the lane marker can be recognized in advance. Consequently, if a part of the lane marker is obscured by grime or is damaged and cannot be recognized, this method cannot be used. In addition, for example, when the road enters an intersection, the white line may temporarily disappear. In this case, it is difficult to recognize the lane marker image areas corresponding to the area immediately before the white line disappears (e.g., immediately before the vehicle enters the intersection) and the area immediately after the white line disappears (e.g., immediately after vehicle passed through the intersection) appropriately.

WO 2011/078300 A1 discloses an imaging device including an imaging unit mounted on a vehicle and obtaining a vertically-polarized image and a horizontally-polarized image of a road surface on which the vehicle is running. The imaging device is configured to detect, on the basis of acquired image data, the position of a roadside structure located adjacent to and at an angle with the road surface.

David Hanwell et al: "DETECTION OF LANE DEPARTURE ON HIGH-SPEED ROADS", International Conference on Pattern Recognition Applications and Methods (ICPRAM), 8 February 2012 (2012-02-08), pages 529.536, XP055141314 discloses a system for detecting and tracking the lanes of high-speed roads in order to warn the driver of accidental lane departures. The system is resistant to visual interference by traffic and irrelevant road markings.

### SUMMARY

The invention is defined by the appended independent claims. The dependent claims relate to preferred embodiments of the description.

It is a general object of the present invention to provide an improved and useful level difference recognition system in which the above-mentioned problems are eliminated. The invention is defined by the subject-matter of the independent claims. The dependent claims relate to preferred embodiments of the invention. In order to achieve the above-mentioned object, there is in one example provided a level difference recognition system 1, installed in a vehicle 100, to recognize one or more level difference image areas EL
and CL indicating one or more level differences on at least one side of a vehicle lane, operatively connected to imaging devices 110A and 110B to capture an image of an area ahead of the vehicle. The level difference recognition system 1 includes a lane marker recognition unit 149, a lane marker storage device 130A, an image extractor 400, and a level difference recognition processor 148. The lane marker recognition unit 149 recognizes a lane marker image (WL) indicating a lane marker on the side of the lane, based on the captured image acquired by the imaging devices 110A and 110B. The lane marker storage devices 130A stores position information of the lane marker image (WL-S) previously recognized by the lane marker recognition unit 149. The image extractor 400 extracts a candidate set of level difference image areas EL-C and CL-C representing the level difference on the side of the lane, based on the captured image acquired by the imaging devices 110A, 110B. The level difference recognition processor 148 executes level difference recognition processing. The level difference recognition processor 148 selects one or more specific level difference image areas EL and CL from the candidate set of level difference image areas EL-C and CL-C, based on relative position of the level difference image areas EL and CL to the lane marker image WL currently recognized by the lane marker recognition unit 149 when the lane marker recognition unit (149) recognizes the lane marker image (WL), and selects one or more specific level difference image areas EL and CL from the candidate set of level difference image areas EL-C, and CL-C based on the position information of the lane marker image WL-S previously recognized by the lane marker recognition unit 149 and stored in the lane marker storage device 130A, when the lane marker recognition unit (149) does not recognize the lane marker image WL, to output the selected level difference area (EL, CL).In another exemplary aspect of this disclosure, there is provided a method for recognizing one or more level difference areas EL and CL indicating one of more level differences on at least one side of a vehicle lane, executed by a level difference recognition system 1 installed in a vehicle 100, the method including the steps of: capturing an image of an area ahead of the vehicle 100; recognizing a lane marker image WL indicating a lane marker on the side of the vehicle lane, based on the captured image; storing a previously recognized lane marker image WL-S; extracting a candidate set of level difference image areas EL-C and CL-C representing the level difference on the side of the vehicle lane, based on the captured image; selecting one or more specific level difference image areas EL and CL from the candidate set of level difference image areas EL-C and CL-C, based on relative position of the level difference images EL and CL to the currently recognized lane marker image WL, when the lane marker image WL is recognized; and selecting one or more specific level difference image areas EL and CL from the candidate set of level difference image areas EL-C and CL-C based on the position information of the previously recognized and stored lane marker image WL-S, when the lane marker image WL is not recognized.

### BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings, wherein:
FIG. 1 is a schematic diagram illustrating an in-vehicle control system including a level difference recognition system;
FIG. 2 is a diagram illustrating a configuration of an imaging unit and an image analysis unit shown in FIG. 1;
FIG. 3 is a schematic expanded view illustrating optical filters shown in FIG. 2 viewed from a direction orthogonal to an optical transmission direction;
FIG. 4 is a diagram illustrating an image divided pattern of each of the optical filters shown in FIG. 3;
FIG. 5 is a functional block diagram illustrating a level difference recognition system according to the first embodiment;
FIG. 6A is one example of parallax distribution in a parallax image;
FIG. 6B is a linear parallax distribution map (V map) representing line-by-line frequency distribution of parallaxes in the parallax image;
FIG. 7A is a schematic image example of a captured image (luminance image) acquired by an imaging device;
FIG. 7B is a graph illustrating the pixel distribution approximate to a straight line based on frequency distribution of the parallaxes for each line calculated by a parallax calculator;
FIG. 8A is one example of a captured image (luminance image) when a white line is obscured by grim and is damaged;
FIG. 8B is one example of the luminance image in which the portion where the white line could not be recognized is supplemented with a generated virtual white line image;
FIG. 9A is one example of a captured image (luminance image) when a white line temporarily disappears where the vehicle enters an intersection;
FIG. 9B is one example of the luminance image in which the portion where the white line disappears is supplemented with generated virtual white line images;
FIG. 10 is a flow chart illustrating a process executed by the level difference recognition processor shown in FIG. 5;
FIG. 11 is a functional block diagram illustrating a level difference recognition processing according to a first variation; and
FIG. 12 is a functional block diagram illustrating a level difference recognition processing according to a second variation.

### DETAILED DESCRIPTION

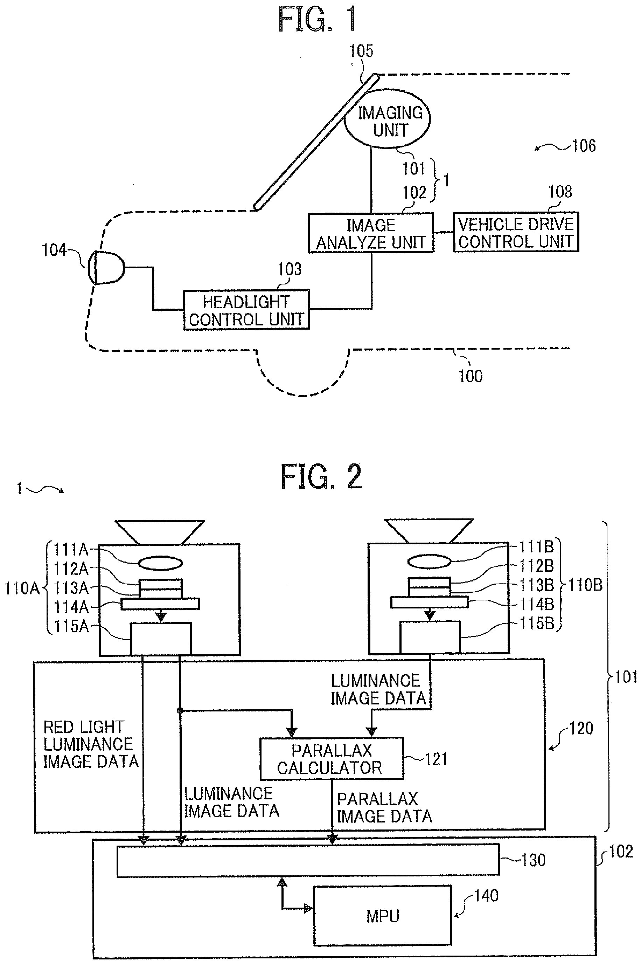

In describing preferred embodiments illustrated in the drawings, specific terminology is employed for the sake of clarity. However, the disclosure of this patent specification is not intended to be limited to the specific terminology so selected, and it is to be understood that each specific element includes all technical equivalents that have the same function, operate in a similar manner, and achieve a similar result, as long as it is comprised within the scope of the appended claims. Referring now to the drawings, wherein like reference numerals designate identical or corresponding parts throughout the several views thereof, and particularly to FIGS. 1 through 12, a level difference recognition system according to illustrative embodiments of the present disclosure is described.

Initially, a vehicle-mounted control system includes a level difference recognition system as in-vehicle system. It is to be noted that, the level difference recognition system according to the present disclosure is not limited to be used for the in-vehicle control system, for example, the level difference recognition system is used for object detection device that detects the object based on captured images.

FIG. 1 is a schematic diagram illustrating an in-vehicle control system 106 including a level difference recognition system 1, according to a present disclosure. The in-vehicle mount control system 106 controls the various devices in a vehicle 100 in accordance with recognition result of the recognition target using the captured image in front of the vehicle direction of travel acquired by an imaging unit 101 installed in the vehicle 100 such a car.

In FIG. 1, the in-vehicle mount control system 106 includes the imaging unit 101, an image analyze unit 102, a headlight control unit 103, and a vehicle drive control unit 108. The imaging unit 101 is provided as a capture device to capture the front area of the vehicle 100 in the direction of the travel. For example, the imaging unit 101 is provided near a rearview mirror near a windscreen 105 of the vehicle 100. The various data, such as, a captured data acquired by the imaging unit 101 is input to the image analyze unit 102 as an image processor. The image analyze unit 102 analyzes the data transmitted from the imaging unit 101, calculates the position, the direction, and the distance of another vehicle in front of the vehicle 100, and detects the dividing line as the lane border to detect a level difference, such as the curb or the center median along the side of the vehicle lane in which the vehicle 100 is traveling. When another vehicle (leading vehicle, oncoming vehicle) is detected, the leading vehicle that moves in the same direction to a direction in which the vehicle 100 is traveling is detected by recognizing a tail lamp of the leading vehicle, and an oncoming vehicle is detected by recognizing the headlamp of the oncoming vehicle.

The calculation result of the image analyze unit 102 is transmitted to the headlamp control unit 103. The headlamp control unit 103 generates a control signal to control the headlamp as the installation members in the vehicle 100 based on the distance data of another vehicle. More specifically, switching between the high beam and lower a beam in a head lamp 104 is controlled or the headlamp 104 is partially shaded, so that the driver in the leading vehicle and the oncoming vehicle can avoid receiving a strong light from the vehicle 100 and dazzling caused by the strong light, and at the same time, the field of view in the driver in the vehicle 100 is ensured.

In addition, the calculation result of the image analyze unit 102 is transmitted to the vehicle drive control unit 108. The vehicle drive control unit 108 performs driving support control to report the alert and control the steering and brakes of the vehicle 100, based on the detection of the road level difference and the lane border.

FIG. 2 is a diagram illustrating a configuration of the imaging unit 101 and the image analyze unit 102. The imaging unit 101 is a stereo camera system that includes two cameras 110A and 110B, and the two cameras 110A and 110B have similar configuration. Respective cameras 110A and 110B include capturing lenses 111A and 111B, optical filters 112A and 112B, image sensors 113A and 113B on which image pickup elements are two-dimensionally arranged. The imaging unit 101 outputs read image data, luminance data, and parallax image data.

In addition, the imaging unit 101 includes a process hardware unit 120 constituted by a field programmable-gate array (FPGA). The process hardware unit 120 includes a parallax calculator 121 to calculate a parallax in the corresponding portions between the captured images, for acquiring the parallax data based on the luminance image data output from the respective imaging units 110A and 110B. Herein, when one captured image acquired by one of the imaging devices 110A and 110B is set as a reference image and the other captured image acquired by the other of the imaging devices 110A and 110B is set as a comparison image, the parallax for a certain image area is calculated as position deviation in the certain image area in the comparison image correlated to the certain image area in the reference image. Using fundamental of triangulation, the distance from the camera system to the same object corresponding to the certain image area in the captured can be calculated based on the calculated parallax.

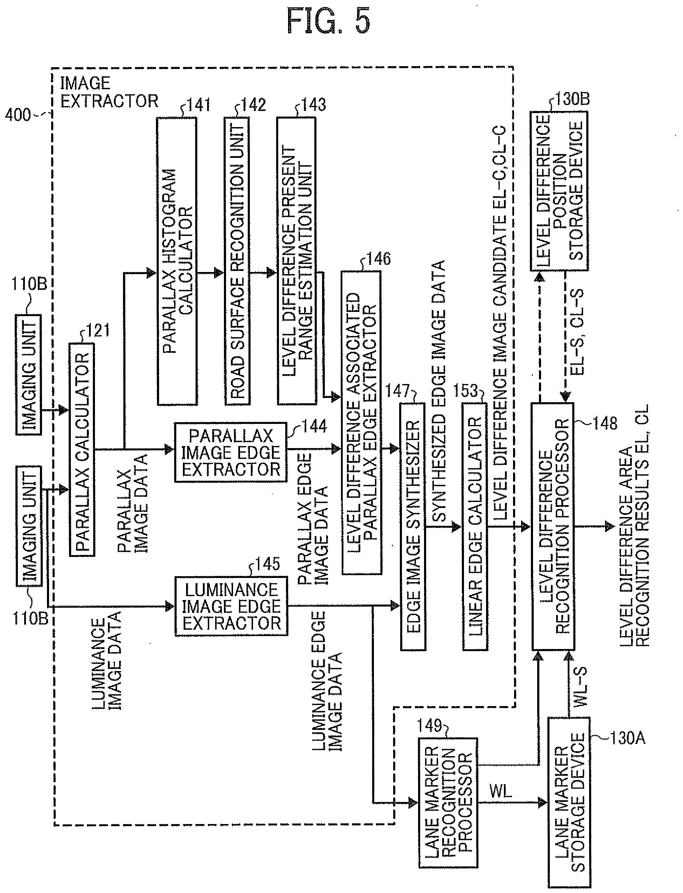

The image analyze unit 102 includes a memory 130 and a micro processing unit (MPU) 140. The memory 130 stores the red-color data, luminance image data, and parallax image data, etc, output from the imaging unit 101. The memory 130 includes a lane marker storage device 130A (see FIG. 5). The MPU 140 installs software that performs recognition processing to recognize targets and controls the parallax calculation.

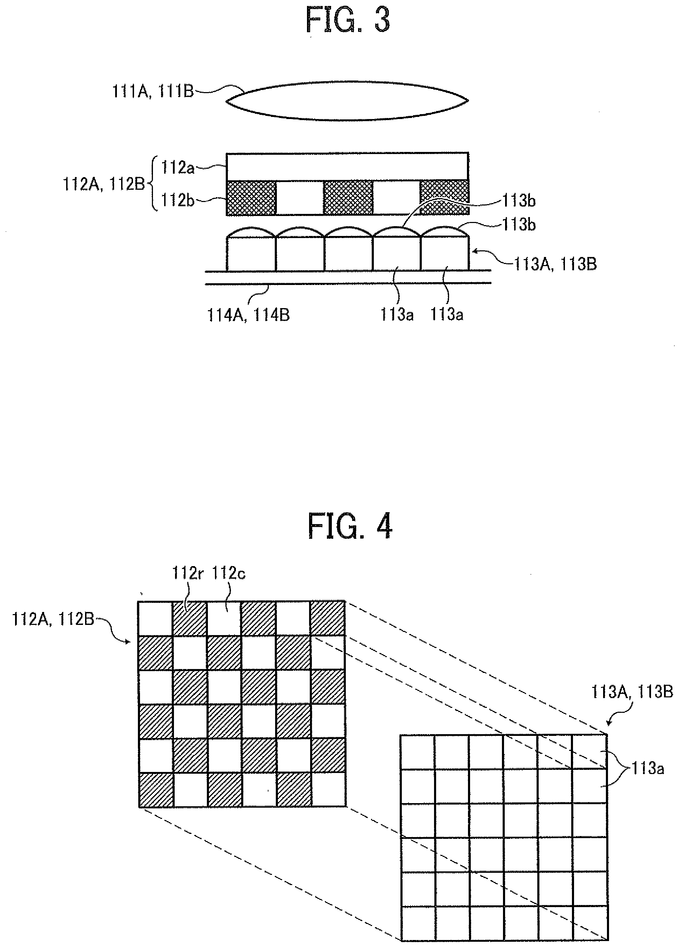

FIG. 3 is a schematic expanded view illustrating the optical filters 112A and 112B and the image sensors 113A and 113B viewed from a direction orthogonal to an optical transmission direction. Each of the image sensors 113A and 113B is constituted by, such as, charge coupled device (CCD) and Complementary Metal Oxide Semiconductor (CMOS), and the imaging element (light-receiving element) is formed by photodiodes 113a. The photodiodes 113a are two dimensionally arranged for each of the imaging pixels in the image sensors 113A and 113B. In order to improve the focus efficiency, a micro lens 113b is provided on the incoming side of the photodiodes 113a. By connecting the image sensors 113A and 113B by printed wiring board (PWB) bonded by wire boding method, sensor substrates 114A and 114B are formed.

The optical filters 112A and 112B are provided adjacent to the micro lens 113b side f the image sensors 113A and 113B. As illustrated in FIG. 3, although a spectral filter layer 112b is formed on a transparent filter substrate 112a in the each of the optical filters 112A and 112B, so that the spectral filter layer 112b is divided into the areas corresponding to the one photodiode 113a in the image sensor 113A and 113B.

Although a clearance may be provided between the optical filters 112A and 112B and the image sensors 113A and 113B, the configuration in which the optical filters 112A and 112B are adhered to the image sensor 113A and 113B is preferable so that the border in each of the optical filters 112A and 112B is brought in line with the border between the image sensors 113A and 113B. The optical filters 112A and 112B are attached to the image sensors 113A and 113B by connecting using a UV adhesive or heat connecting using UV adhesive and the heat adhesive for four sides outer the effective pixels while the effective pixel range used for capturing image is supported by a spacer.

FIG. 4 is a diagram illustrating image divided pattern of the optical filters 112A and 112B according to the embodiments. In the optical filters 112A and 112B, two types consisting of a first area and a second area are arranged on one photodiode 113a in each of the image sensors 113A and 113B. Therefore, the light receiving amount received by the photodiodes 113a in the image sensors 113A and 113B can be acquired by spectral information in accordance with the types of the area of the spectral filter layer 112b through which the received light is transmitted.

The optical filters 112A and 112B according to the present embodiment, the first area is a red-color spectral area 112r through which only red wavelength band is selected and transmitted, and the second area is a non-spectral area 112c through which the light is transmitted without selection of the wavelength. Then, as for the optical filters 112A and 112B, the first area 112r and the second area 112c are arranged in check-board pattern. Accordingly, in the present embodiment, the red luminance image is acquired from the output signal of the captured pixel corresponding to the first area 112r, and the non-spectral luminance image is acquired from the output signal of the captured pixel corresponding to the second image region 112c. In the present embodiment, when the image is captured at one time, the two types of the captured image data corresponding to the red luminance image and the non-spectral luminance image can be acquired. In these processed images, although the number of pixels become fewer than the number of captured pixels, when the high-resolution image is acquired, the known image interpolation processing can be used.

The red luminance image thus acquired above can be used for detecting the teal lamp that emits the red light. In addition, the non-spectral luminance image data can be used for detecting the white line (dividing line of lane), curb and center median of the road side level differences, and the head lamp of the oncoming vehicle.

Next, the level difference recognition processing is described below. FIG. 5 is a block diagram illustrating the level difference recognition system 1 according to the first embodiment. In FIG. 5, the level difference recognition system 1 includes the imaging units 110A and 110B, an image extractor 400, a level difference recognition processor 148, a lane marker recognition processor 149, and a lane marker storage device 130A. The image extractor 400 includes the parallax calculator 121, a parallax calculator 141, a road area recognition unit 142, a level difference present range estimation unit 143, a parallax image edge extractor 144, a luminance image edge extractor 145, a level difference associated parallax edge extractor 146, an edge image synthesizer 147, and a linear edge calculator 153. The level difference recognition processor 148, the lane marker recognition processor 149, and elements 141, 142, 143, 143, 145, 146, 147, and 153 of the image extractor 400 other than the parallax calculator 121 are implemented by the MPU 140 (see FIG. 2). In addition, a level difference storage device 130B may be included in the memory 130, which is described below as a third variation.

The parallax calculator 121 sets the captured image data acquired by one imaging device 110A as the reference image data and the captured image data acquired by the other imaging device 110B as the comparison image. Then, the parallax calculator 121 calculates the parallax between the reference image and the comparison image for generating the parallax image data. The parallax image data represents the pixel values, in accordance with the parallax calculated for the image data on the reference image data, as the pixel values in the respective values in the image.

More specifically, the parallax calculator 121 defines the blocks constituted by multiple pixels (for example, 16 x 1 pixels) around single target pixel for the line on which the reference image is present. By contrast, in the same line to the line in which the comparison image is present, the block having the same size to the defined block of the reference image data is shifted in a lateral direction (X-direction), and the correlation value representing the relation to the feature amount representing the features of the pixel value of the defined block in the reference image data. Then, based on the calculated correlation value, the parallax calculator 121 performs block matching to select the block having the most correlation to the block in the reference image from the blocks in the comparison images.

Subsequently, the position deviation amount between the target pixel of the block in the reference image data and the corresponding pixel of the block of the comparison image selected in the matching processing is calculated as the parallax. This parallax calculation process is performed for the entire area or a specific area f the reference image, the parallax image data can be acquired. The above-acquired parallax data is transmitted to the parallax histogram calculator 141 and the parallax image edge extractor 144.

As for the feature amount of the block used for the matching processing, for example, the value (luminance values) of the respective pixels in the block is used. As for the correlated value, for example, the sum of the difference between the respective pixel values (luminance values) of the block in the reference image and the respective pixel values (luminance values)of the block in the comparison image correlated to the respective pixel values of the block in the reference image. In this case, the block whose sum is the smallest means the most correlated block in the parallax image.

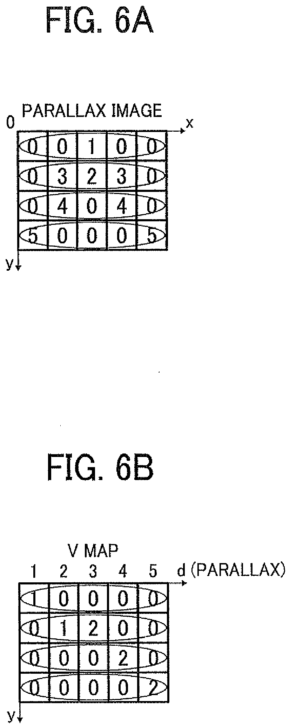

The parallax histogram calculator 141 acquires the parallax image data and then calculates frequency distribution of the parallaxes for the respective lines of the parallax data. More specifically, when the parallax image data having the distribution of the parallax like that shown in FIG. 6A is input, the parallax histogram calculator 141 calculates the frequency distribution of the parallax data like that shown in FIG. 6B for each line to output. FIG. 6A is one example of parallax distribution in the parallax image. FIG. 6B is a linear parallax distribution map (V map) representing line-by-line frequency distribution of the parallaxes in the parallax image.

Based on the above-acquired information of the frequency distribution of the parallaxes for each line, for example, when the longitudinal direction of the V map is set as the longitudinal direction position on the parallax image and the parallax image is set in the lateral direction, the parallax distribution map (V map) on which the respective pixels on which the parallax image data is distributed can be acquired on the two-dimensional plane surface.

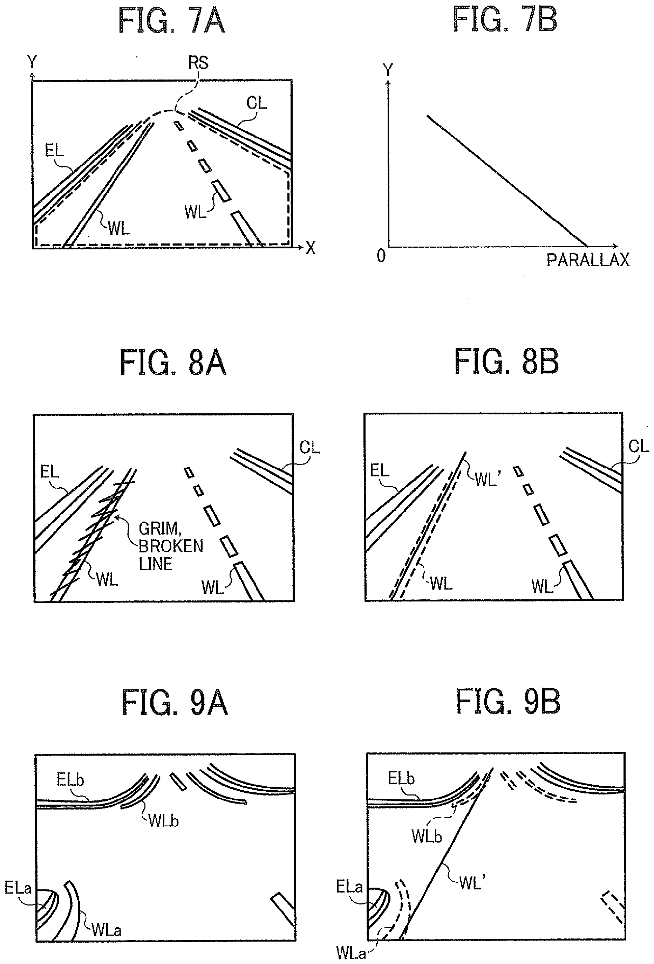

FIG. 7A is a schematic image example of the captured image (luminance image) acquired by the imaging device 110A. FIG. 7B is a graph illustrating the pixel distribution approximate to the straight line based on the frequency distribution of the parallaxes for each line calculated by the parallax histogram calculator 141. The image example shown in FIG. 7A shows the situation in which the vehicle drives in the left lane in the two straight lane, mark CL represents the center median image showing the center median, mark WL represents the white image area (lane marker image area), and mark EL represents a roadside level difference image area. Herein, the roadside level difference image area EL and the center median CL together called as the level difference image. In addition, an area RS surrounded by a broken line represents the road marked off by the center median and the roadside level difference along the sides of the vehicle lane in which the vehicle 100 is traveling.

In this embodiment, the road area recognition unit 142 recognizes the road area RS based on the information of the frequency distribution of the parallax for each line output from the parallax histogram calculator 141. More specifically, the road area recognition unit 142 acquires the information of the frequency distribution of the parallax for each line output from the parallax histogram calculator 141. Then, the road area recognition unit 142 converts the pixel distribution on the line parallax information specified by the information into an approximate straight line data by approximating process using least-squares method and the Hough transform method. The acquired approximate straight line of FIG. 5B has a gradient whose parallax is smaller as the position is moved up in the image, in the lower portion of the line parallax distribution map corresponding to the lower portion of the parallax image. That is, this graph of FIG. 5B indicates that the pixels (pixel in the parallax image) positioned on the approximate straight line or near the approximate straight line are present in the respective lines in the parallax image from almost same distance and is the highest occupancy and these pixels shows that the position of captured targets becomes continuously far from the vehicle 100 as the position of the graph is moved up.

Herein, since the imaging unit 110A captures the area ahead of the vehicle 100, as illustrated in FIG. 7A, the contents of the parallax image, the occupancy of the road area RS is the largest on the lower portion of the image, and the parallax of the road area RS becomes smaller as the position is moved in an upper portion. In addition, in the same line (lateral line), the pixels constituting the road area RS has almost same parallax.

The pixels positioned on the approximate straight line or near the approximate straight line are present in the respective lines on the line parallax distribution parallax map (V map), specified by the information of the frequency distribution parallax for each line output from the parallax histogram calculator 141 corresponds to the feature of the pixels constituting the road area RS. Accordingly, the pixels positioned on the approximate straight line or near the approximate straight line like that shown in FIG. 7B can be assumed as the pixels constituting the road area RS with a high degree of accuracy.

As described above, the road area recognition unit 142 performs straight-line approximation processing on the line parallax distribution parallax map (V map), specified by the information of the frequency distribution parallax for each line output from the parallax histogram calculator 141, and then specifies the pixels positioned on the approximate straight line or near the approximate straight line as the pixels showing the road, and recognizes the image area occupied by the specified pixel as the road area RS.
It is to be noted that, the white line WL is present on the road like that shown in FIG. 7A, the road area recognition unit 142 recognizes the road area RS containing the lane marker image area WL. The recognition result of the road area recognition unit 142 is transmitted to the level difference presenting range estimation unit 143.

When acquiring the information of the road area RS from the road area recognition unit 142, the level difference presenting range estimation unit 143 estimates a predetermined range determined in advance containing the lane marker of both sides of the road area RS as the level difference presenting range where the roadside level difference is present. Then, the estimation result is transmitted to the level difference associated parallax edge extractor 146.

Along with these processes, the parallax image edge extractor 144 extracts the portion where the pixel value (parallax) is changed over a specified value as the edge area, and then generates the parallax edge image data from the abstract result. The parallax edge image data is the image data expressing two values of edge area and a non-edge area. A known method is used for the method of edge extracting. The parallax edge image data generated by the parallax image edge extractor 144 is transmitted to the level difference associated parallax edge extractor 146.

After acquiring the parallax edge image data from the parallax image edge extractor 144, the level difference associated parallax edge extractor 146 restricts (extracts) the parallax edge area within the level difference presenting range, based on the estimation result of the level difference presenting range acquired from the level difference presenting range estimation unit 143. Then, based on the extraction result, the level difference parallax edge image data is generated.

Although the above-generated level difference associate parallax edge image data is abstracted as the only edge area representing the both side edges in the road area RS from the edge areas of the parallax image, there is possibility to contain the areas other than the roadside level difference in the extracted edge areas. In order to respond to this situation, in the present embodiment, the edge image synthesizer 147 narrows down the level difference associated parallax edge area showing the roadside level difference.

The luminance image data captured by the imaging unit 110A is transmitted to the luminance image edge extractor 145. Then, the luminance image edge extractor 145 extracts the portion where the pixel value (parallax) of the luminance image is changed over the specified value as the edge area, and generates the luminance edge image data from the extraction result. The luminance edge image data is the image data representing the two values of the edge area and the non-edge area. A known method is used for the method to extract the luminance edge. The luminance edge image data generated by the luminance image edge extractor 145 is transmitted to the edge image synthesizer 147 and the lane marker recognition processor 149.

The edge image synthesizer 147 performs synthesis processing to synthesize the level difference associated parallax edge data acquired by the level difference associated parallax edge extractor 146 and the luminance edge image data acquired by the luminance image edge extractor 145 to generate synthesized edge image data. More specifically, edge image synthesizer 147 synthesizes both image data, so that the area of consistent with the luminance edge areas contained in the luminance edge image data is extracted from the level difference associated parallax edge contained in the level difference associated parallax edge data. The synthesized edge image data generated in this synthesized processing is transmitted to the linear edge calculator 153.

Even in the above-generated synthesized edge image data, the edge area showing other than the roadside may be contained. In order to solve this problem, using the lane marker recognition result of the lane marker recognition processor 149, the level difference recognition processor 148 selects the most likely roadside level difference associated parallax edge area from the level difference associated parallax edge areas, and then recognizes the selected level difference associated parallax edge areas as the level difference images EL and CL.

The lane marker recognition processor (white line recognition processor) 149 recognizes the lane marker image (white line image area) WL showing the white line on the road based on the luminance image data. In many roads, the white line is formed on the road whose color is near black, and the luminance of the white line image area WL in the luminance image is sufficiently higher than that of the road area. Accordingly, the edge area having the luminance image is changed over the predetermined value in the luminance image is likely to be the edge area of the white line.

In addition, since the white line image area WL showing the white line on the road is projected onto the captured image with a line shape, by identifying the linear edge area, the edge area of the white line can be recognized with a high degree of accuracy. Therefore, in the present embodiment, the lane marker recognition processor 149 performs estimation processing using least-squares method and Hough transform from the luminance edge data acquired by the luminance image edge extractor 145 to approximate to the straight line and then recognizes the acquired approximated straight line as the edge area of the white line (white line image area WL showing the white line on the road). The recognition result WL of the lane marker recognition processor 149 is transmitted to the level difference recognition processor 148, which is used for the recognition processing to recognize the roadside level difference area EL and CL in the level difference recognition processor 148.

Furthermore, in the white line (lane marker) recognition process, using the recognition result of the road area RS recognized by the road area recognition unit 142, the recognition process to recognize the white line image area WL is performed for the luminance edge area in the road area RS, which can reduce recognition processing load and improve the recognizeability.

The linear edge calculator 153 extracts a linear level difference associated parallax edge areas EL-C and CL-C from the level difference associated parallax edge area represented by the synchronized edge image from the edge image synthesizer 147. Since the level difference image areas showing the roadside level difference such as the curb and the center median are linear in shape in the captured image, by extracting the linear level difference associated parallax edge area, the edge area of the roadside level difference can be recognized with a high degree of accuracy. In the extraction process of the linear level difference associated parallax edge area, approximating to the straight line, for example, the least-squares method or the Hough transform process, is performed , and the acquired approximate straight line is extracted as the edge area of the roadside level difference (candidate set of roadside level difference image areas EL-C and CL-C).

Herein, in general, the roadside level differences EL and CL such as curb or center median are positioned opposite to the vehicle lane from the white line WL. In addition, the roadside level difference EL is parallel to the white line WL. On the captured image acquired ahead of the vehicle, the line-shaped level difference areas EL and CL are extended within a predetermined angle for the linear white line image area WL. Therefore, relative position between the level difference image areas EL and CL and the white line image area WL is normally limited in a certain limited area.

Accordingly, in the present embodiment, after the line-shaped level difference associated parallax edge area (candidate set of roadside level difference image areas EL-C and CL-C) is extracted by the linear edge calculator 153, the level difference recognition processor 148 restricts the candidate set of roadside level difference image areas EL-C and CL-C within a specified certain limited area so that the restricted candidate set of roadside level difference image areas can be positioned within the certain limited area based on the relative position to the white line WL recognized by the lane marker recognition processor 149, to recognize the limited candidate set of level difference image areas as the level difference image areas EL and CL.

The information of the above-recognized level difference image areas EL and CL is transmitted to a subsequent processor and then is used for the various processes. For example, the information of the level difference images EL and CL is used for a recognition process to recognize a drive available area RS where the vehicle 100 can drive on the road marked off by the level difference image areas EL and CL.

Herein, in the process executed by the lane marker recognition processor 148, by using the recognition result of the white line image area WL currently recognized by the lane marker recognition processor 149, the level difference image areas EL and CL can be recognized with a high degree of accuracy. Therefore, for example, as illustrated as the reference numeral WL of left side in FIG. 8A, if a part of the white line image area WL is obscured by grime or is damaged and cannot be recognized by the lane marker recognition processor 149, the level difference recognition processor 148 cannot perform the recognition process of the level difference image areas EL and CL using the recognition result of the white line image area WL, which may degrade the recognizeability of the level difference image areas EL and CL.

In addition, for example, as illustrated in FIG. 9A, when the road enters an intersection, the white line WL may disappear. In this case, recognizing that fact immediately before a white line WLa disappears (e.g., immediately before the vehicle enter the intersection) or immediately after a white line WLb disappears (e.g., immediately after vehicles passed through the intersection) appropriately is difficult. In this case, the recognizeability of the level difference image area ELa corresponding to the place immediately before the white line WLa temporarily disappears (e.g., immediately before the vehicle enters the intersection) and the level difference image area ELb corresponding to the place immediately after the white line WLb temporarily disappears (e.g., immediately after the vehicle passed through the intersection) is degraded.

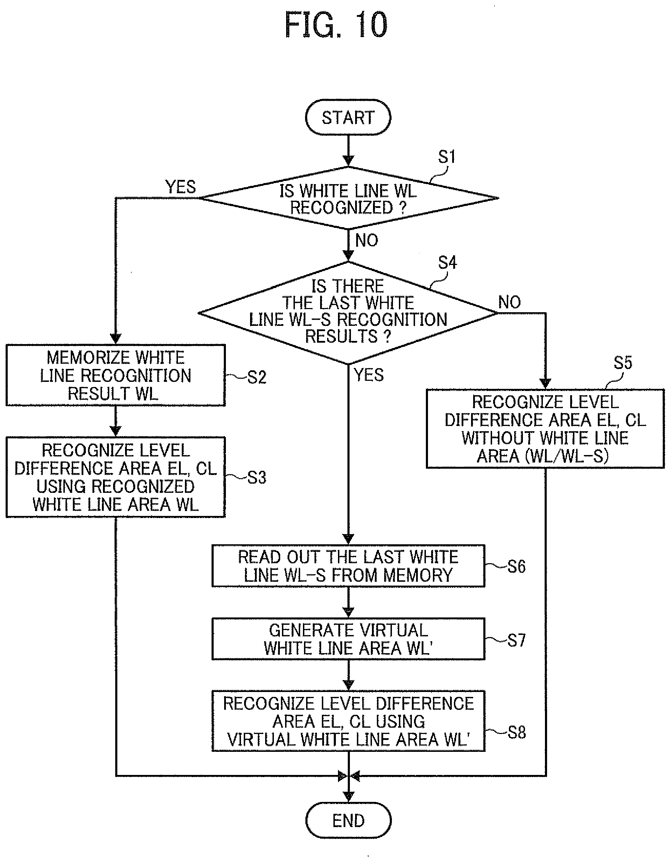

FIG. 10 is a flow chart illustrating a process executed by the level difference recognition processor 148 in accordance with the recognition result of the white line image area WL. In the present embodiment, when the lane marker recognition processor 149 cannot recognize the white line image area WL, the subsequent level difference recognition processor 148 performs the below-described process.

Initially, at step S1, when the synthesized edge image data from the edge image synthesizer 147 is received, the level difference recognition processor 148 determines whether the lane marker recognition processor 149 can recognize or not the white line image area WL. At this time, when the level difference recognition processor 148 determines that the lane marker recognition processor 149 could recognize the white line image area WL (Yes at step S1), the recognition result WL is stored in the lane marker storage device 130A in the memory 130 at step S2 and perform the above-described level difference recognition process to recognize the level difference image areas EL using the currently recognized white line image area WL at step S3. The lane marker storage device 130A saves previous recognition results of the white line image area WL-S for a predetermined period determined in advance.

On the contrary, when the level difference recognition processor 148 determines that the lane marker recognition processor 149 could not recognize the white line image area WL (No at step S1), the level difference recognition processor 148 determines whether the lane marker storage device 130A saves the previous recognition results of the white line WL-S (the recognition results of the white line recognized within a predetermined number of last frames) at step S4. Herein, when the level difference recognition processor 148 determines that the lane marker storage device 130A does not save the previous recognition results of the white line WL-S (No at step S4), the level difference recognition processor 148 performs recognition processing without using the white line image area WL(WL-S) at step S5. The recognition result of the level difference image areas EL and CL processed through step S5 has lower recognizeability, compared to the recognition results of the level difference image areas EL and CL processed through step S3 using the white line image area WL.

On the contrary, when the level difference recognition processor 148 determines that the lane marker storage device 130A saves the previous recognition results of the white line WL-S (Yes at step S4), the level difference recognition processor 148 reads out the previous recognition results of the white line WL-S from the lane marker storage device 130A at step S6. Then, the level difference recognition processor 148 assumes that a white line should be present on the last read recognition results of the white line WL-S (previous lane marker image) to generate a virtual white line image area WL' corresponding to the assumed white lines at step S7, as illustrated in FIGS. 8B and 9B. Subsequently, the level difference recognition processor 148 restricts the candidate set of roadside level difference image areas EL-C and CL-C within a specified certain area based on the relative position to the generated virtual white line image area WL' and finally outputs the selected candidate set of roadside level difference image areas as the level difference image areas EL, ELa, and ELb at step S8.

As described above, in the present embodiment, even when the white line image area WL cannot be recognized temporarily, by generating the virtual white line image area WL' based on the previously recognized recognition results of the white line image areas WL-S, the level difference image areas EL, ELa, and ELb can be recognized based on the white line image area WL supplemented with the virtual white line image area WL'.

### (Variation 1)

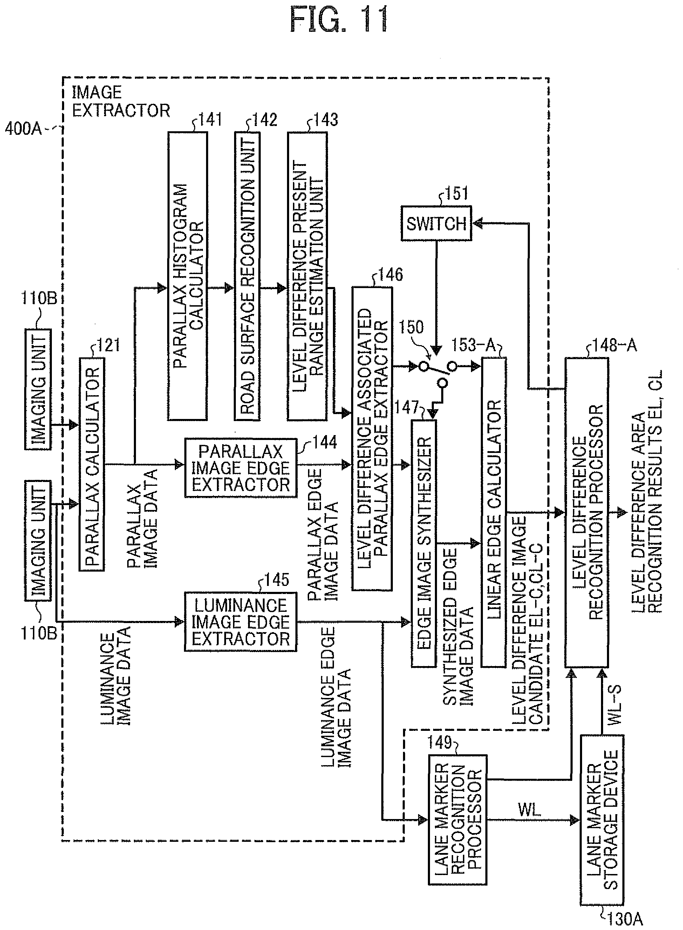

Next, a first variation of level difference recognition processing is described below. FIG. 11 is a functional block diagram illustrating the level difference recognition processing according to the first variation.

In an image extractor 400A of the present variation, a linear edge calculator 153-A can extract the linear level difference associated parallax edge area (candidate set of roadside level difference image areas EL-C and CL-C) from the level difference associated parallax edge area from the level difference associated parallax edge extractor 146, without using the synthesized edge image data. Then, a level difference recognition processor 148-A restricts the candidate set of roadside level difference image areas EL-C and CL-C so that the level difference associated parallax edge area is positioned within a certain limited area based on the relative position to the white line WL recognized by the lane marker recognition processor 149, and then recognizes the selected(restricted) candidate set of roadside level difference image areas as the level difference image areas EL and CL while switching whether the synthesized image data is used or not.

When the level difference image areas EL and CL can be recognized using this process, the synchronization process to synchronize the parallax image data and the luminance image data can be limited, which can realize reduction of the processing load in the level difference recognition process and improves the processing speed of the level difference recognition process.

If the linear edge calculator 153-A cannot recognize the level difference associated parallax edge area from the level difference associated parallax edge extractor 146, the level difference recognition processor 148 outputs the result of non-recognition to a switch controller 151. When receiving this result, the switch controller 151 adjusts a switch 150 to switch so that the level difference associated parallax edge area from the level difference associated parallax edge extractor 146 is input to the edge image synthesizer 147. At this time, similarly to the first embodiment, the edge image synthesizer 147 performs synthesis processing to synthesize the level difference associated parallax edge data acquired by the level difference associated parallax edge extractor 146 and the luminance edge image data acquired by the luminance image edge extractor 145 for outputting the synchronized edge image data to the linear edge calculator 153.

Subsequently, the linear edge calculator 153-A extracts the candidate set of roadside level difference image areas EL-C and CL-C from the synchronized edge images, and then the level difference recognition processor 148-A selects the level difference image areas EL and CL from the candidate set of roadside level difference image areas EL-C and CL-C so that the selected candidate set of roadside level difference image areas is positioned within a certain limited area based on the relative position to the white line WL recognized by the lane marker recognition processor 149, for identify the level difference image areas EL and CL.

In the present variation, the level difference images EL and CL can be recognized at a higher speed, in addition to with high degree of accuracy.

### (Variation 2)

Next, s second variation of level difference recognition processing is described below. A level difference recognition processor 148-B recognizes the level difference image area EL and CL using vanishing points of white line image areas WLa and WLb, in addition to the information of the white line image area WL. Alternatively, the level difference recognition processor 148-B can recognize the level difference image area EL and CL using the vanishing points of the white line image areas WLa and WLb, instead of the information of the white line image area WL.

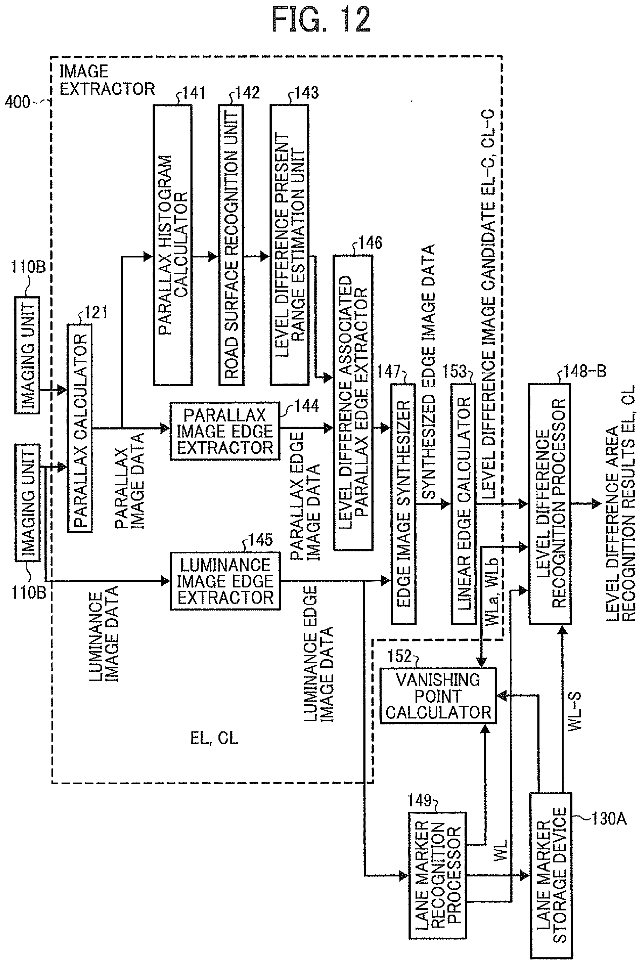

FIG. 12 is a functional block diagram illustrating level difference recognition processing according to the second variation. In the second variation, the white line recognition result from the lane marker recognition processor 149 is not only transmitted to the level difference recognition processor 148-B and the lane marker storage device 130A but also a vanishing point calculator 152. The vanishing point calculator 152 calculates the vanishing points of the virtual white line image WLa and WLb based on the white line image WL-S recognized by the lane marker recognition processor 149. The level difference recognition processor 148-B restricts the candidate set of roadside level difference image areas EL-C and CL-C within the certain limited area so that the restricted candidate set of roadside level difference image areas can be positioned within the certain limited area based on the relative position to the currently recognized white line image area WL, or so that an extended line of the restricted virtual candidate set of roadside level difference image areas can pass through the second certain range around the vanishing points of the virtual white lines WLa and WLb calculated by the vanishing point calculator 152. That is, when the lane marker recognition unit 149 cannot recognize the white line image area WL, the level difference recognition processor 148 selects the level difference image areas EL and CL from the candidate set of roadside level difference image areas EL-C and CL-C whose extended line can pass through the second certain range around the vanishing points of the virtual white lines WLa and WLb..

In general, the extended line of the side-strip level difference, such as curb and center median passes through the certain area near the vanishing points of the white line images WL along the sides of the vehicle lane in which the vehicle 100 is driving.

Even when the level difference recognition processor 148 cannot sufficiently select the roadside level difference image areas EL and CL from the candidate set of roadside level difference image areas EL-C and CL-C based on the relative position of the roadside level difference image areas EL and CL to the white line WL currently recognized by the lane marker recognition processor 149, by extracting the candidate set of roadside level difference image areas EL-C and CL-C based on the vanishing points of the virtual white line image WLa and WLb, the level difference recognition processor 148 can reliably select the roadside level difference image areas EL and CL from the candidate set of roadside level difference image areas EL-C and CL-C based on the vanishing point of the virtual white line image WL' and the recognizeability of the level difference images EL and CL can be improved.

More specifically, in a state in which the lane marker recognition processor 149 cannot recognize the white line image area WL , the vanishing point calculator 152 calculates the vanishing points of the virtual white line image area WLa and WLb based on the last white line recognition result WL-S (white line recognition result recognized within certain numbers of previous frames). Then, the level difference recognition processor 148 restricts the candidate set of roadside level difference image areas EL-C and CL-C based on the vanishing point of the virtual white line image WL'.

In the second variation, the level difference image areas EL and CL are recognized, by using the white line image WL or the vanishing point of the virtual white line image area WL'. Therefore, compared to the case in which the vanishing point is not used, the level difference image areas EL and CL can be recognized with a higher degree of accuracy. In particular, under conditions that the white line image WL cannot be temporarily recognized, the vanishing point of the virtual white line WL' can be generated based on the previous recognition results of the white line image area WL-S, and the vanishing point of the current white line image area WL can be compensated with the generated vanishing point of the virtual white line image area WL', thereby enabling the level difference image areas EL and CL to be recognized with a higher degree of accuracy.

In the above-described embodiment and variations, when the level difference image areas EL and CL are recognized, the captured image is narrow down based on various features of the level difference image areas EL and CL, such as, the extraction result of the parallax edge, the recognition result of the road area RS (estimation result of the level difference presenting range), the recognition result of the luminance edge, the recognition results of the white line image WL and the virtual white line image WL', the formation recognition result (linear shape recognition), and the calculation result of the vanishing point. With these processes, higher accuracy of the recognition process of the level difference image area EL and CL can be realized. Alternatively, the above-described extracting conditions can be eliminated, or the additional extracting condition can be added.

### (Variation 3)

In a third variation, a level difference storage device 130B (see FIG. 5) can be included in the memory 130 can save multiple previous recognition results recognized based on the multiple captured images continuously acquired at a certain time intervals (frame rate).

Using the previous recognition results in the last frame or before the second last frame stored in the level difference storage device 130B, extracting element of whether the virtual candidate set of roadside level difference image areas EL'-C and CL'-C recognized by the current recognition process is consistent with a previous level difference area indicating the previous position information of the previous white line stored in the level difference position storage device 130B can be added

### (Variation 4)

In a fourth variation, if the multiple candidate sets of roadside level difference image areas are present, the level difference recognition processor 148 can recognize the nearest roadside candidate set of roadside level difference image areas to the vehicle 100 as the level difference image area EL or CL.

Herein, the present invention of the present disclosure can provide, in addition to the target recognition system and the target recognition method described above, a computer readable program for executing the method. The computer program that implements the functions of the level difference recognition system according to the above-described embodiment and variation can be configured to be stored in a computer connected to a network, such as the Internet, and provided by being downloaded via the network. The computer program that implements the image processing according to the present embodiment can be configured to be provided or distributed via a network, such as the Internet. The computer program to be executed by the image processing apparatus according to the present embodiment can be provided by being recorded in a computer-readable recording medium such as a CD-ROM, an FD, a CD-R, and a DVD as a file in an installable format or an executable format.

Alternatively, the computer program to be executed by the target recognition system according to the present embodiment can be provided by being downloaded by a predetermined transmission device over a transmission medium, such as telephone line, dedicated network, Internet, and other communication systems. Herein, while transmitting the program, at least a part of computer program should be transmitted through the transmission medium. That is, not all of data constituting the computer program should be present in the communication medium (signal) at one time. The communication medium (signal) is implemented by a carrier wave of a computer data signal containing the computer program. A communication method to transmit the computer program from the predetermined transmission device may contain a continuous transmission process to transmit the data constituting the computer program and an intermittent transmission process.

## Claims

1. A level difference recognition system (1) to recognize one or more level difference image areas (EL, CL) indicating one or more level differences on at least one side of a vehicle lane, wherein the level difference represents a curb or center median along the side of the vehicle lane in which the vehicle (100) is traveling and wherein the level difference recognition system (19) is operatively connected to imaging devices (110A, 110B) to capture an image of an area ahead of the vehicle (100),
the level difference recognition system (1) comprising:
an image extractor (400) configured to extract a candidate set of level difference image areas (EL-C, CL-C) representing the level difference on the side of the lane, based on the captured image acquired by the imaging devices (110A, 110B),
wherein the image extractor (400) comprises a luminance image edge extractor (145), a parallax calculator (121), a parallax image edge extractor, a road surface recognition unit and a linear edge calculator (153),
wherein the luminance image edge extractor is configured to generate a luminance edge image by extracting edge areas in a captured image acquired by one of the imaging devices (110A, 110B),
wherein the parallax calculator is configured to generate a parallax image, wherein the parallax for a certain image area is calculated as a position deviation in the certain image area in a comparison image correlated to the certain image area in a reference image, when one captured image acquired by one of the imaging devices (110A, 110B) is set as the reference image and the other captured image acquired by the other one of the imaging devices (110A, 110B) is set as the comparison image;
wherein the parallax image edge extractor is configured to generate a parallax edge image by extracting edge areas in the parallax image,
wherein the road surface recognition unit is configured to recognize the road surface based on a V-disparity map computed from the parallax image,
wherein the linear edge calculator (153) is configured to identify the one or more linear edge image areas by extracting linear edges in an edge image formed by combining the luminance edge and the parallax edge image, the parallax image being further restricted to keep the edge areas contained within the recognized road surface,
wherein the image extractor (400) is configured to extract the identified linear edge images as the candidate set of level difference image areas (EL-C, CL-C); and
a lane marker recognition unit configured to recognize a lane marker image (WL) indicating a lane marker on the side of the lane, based on a change of luminance in the captured image acquired by one of the imaging devices;
a lane marker storage device configured to store position information of the lane marker image (WL-S) previously recognized by the lane marker recognition unit;
a level difference recognition processor (148) configured to execute level difference recognition processing,
the level difference recognition processor (148) being configured to:
select one or more specific level difference image areas (EL, CL) from the candidate set of level difference image areas (EL-C, CL-C), based on relative position of the level difference image areas (EL, CL) to the lane marker (WL) currently recognized by the lane marker recognition unit (149), when the lane marker recognition unit (149) recognizes the lane marker (WL), to output the one or more selected level difference image areas (EL, CL); and
select one or more specific level difference image areas (EL, CL) from the candidate set of level difference image areas (EL-C, CL-C) wherein a virtual lane marker image (WL') is generated at the position defined by the position information of the lane marker (WL-S) previously recognized, and wherein the one or more specific level difference image areas (EL, CL) are further selected by restricting the candidate set of level difference images areas (EL-C, CL-C) within a specified area based on the relative position to the virtual lane marker image (WL'), when the lane marker recognition unit (149) does not recognize the lane marker image (WL), to output the one or more selected level difference areas (EL, CL).

2. The level difference recognition system (1) according to claim 1, further comprising a vanishing point calculator (152), operatively connected to the lane marker recognition unit (149) and the level difference recognition processor (148),
wherein, when the lane marker recognition unit (149) does not recognize the lane marker area (WL), the level difference recognition processor (148-B) generates position information of a virtual lane marker image (WL', WLa, WLb) based on the position information of the last lane marker image (WL-S) stored in the lane marker storage device (130A), the vanishing point calculator 152 identifies the vanishing points of the virtual lane marker images (WLa, WLb) based on the position information of the last lane marker image (WL-S), and then the level difference recognition processor (148)recognizes a linear edge image, whose extended line passes through a certain range surrounding the vanishing points of the lane marker images (WLa and WLb), of the candidate set of level difference image areas (EL-C, CL-C), as one or more level difference image areas (EL, CL).

3. The level difference recognition system (1) according to claim 1, further comprising:
a level difference position storage device (130B) configured to store position information of the level difference (EL-S, CL-S) previously recognized by the level difference recognition processor (148),
wherein, where the lane marker recognition unit (149) does not recognize the lane marker area (WL), the level difference recognition processor (148) generates position information of a virtual lane marker image (WL') based on the position information of the last lane marker image (WL-S) stored in the lane marker storage device (130B) and calculates a virtual candidate set of level difference image areas (EL'-C, CL'-C) based on the relative position of the virtual lane marker image (WL'), and
wherein, when position information of the virtual candidate set of level difference image areas (EL'-C, CL'-C) is consistent with position information of the last level difference image area (EL-S, CL-S) stored in the level difference position storage device (130B), the level difference recognition processor (148) outputs the virtual candidate set of level difference image areas (EL'-C, CL'-C) as the level difference image area (EL, CL).

4. The level difference recognition system (1) according to any one of claims 1 to 4, wherein, when the image extractor (400) extracts multiple candidate sets of level difference image areas, the level difference recognition processor (148) recognizes the closest candidate set of level difference image areas to the vehicle (100) as the level difference image area (EL, CL).

5. The level difference recognition system (1) according to any one of claims 1 to 4, further comprising the imaging devices (110A, 110B) operatively connected to the image extractor (400).

6. A method for recognizing one or more level difference areas (EE, CL) indicating one or more level differences on at least one side of a vehicle lane, wherein the level difference represents a curb or center median along the side of the vehicle lane in which the vehicle is travelling and wherein the method is executed by a level difference recognition system (1) and operatively connected to imaging devices to capture images of an area ahead of the vehicle, the method comprising the steps of:
capturing images of the area ahead of the vehicle (100),
extracting a candidate set of level difference image areas (RL-C, CL-C) representing the level difference on the side of the lane, based on the captured images acquired by the imaging devices,
wherein the extracting is performed by an image extractor (400) comprising a luminance image edge extractor (145), a parallax calculator (121), a parallax image edge extractor, a road surface recognition unit and a linear edge calculator (153),
wherein the luminance image edge extractor (145) generates a luminance edge image by extracting edge areas in a captured image acquired by one of the imaging devices (110A, 110B),
wherein the parallax calculator (121) generates a parallax image, wherein the parallax for a certain image area is calculated as a positon deviation in the certain image area in a comparison image correlated to the certain image area in a reference image, when one captured image acquired by one of the imaging devices (110A, 110B) is set as the reference image and the other captured image acquired by the other one of the imaging devices (110A, 110B) is set as the comparison image,
wherein the parallax image edge extractor generates a parallax edge image by extracting edge areas in the parallax image,
wherein the road surface recognition unit recognizes the road surface based on a V-disparity map computed from the parallax image,
wherein the linear edge calculator (153) identifies one or more linear edge image areas by extracting linear edges in an edge image formed by combining the luminance edge image and the parallax edge image, the parallax image being further restricted to keep the edge areas contained within the recognized road surface,
wherein the image extractor (400) extracts the identified linear edge images as the candidate set of level difference image areas (EL-C, CL-C),
wherein the level difference recognition system (1) comprises a lane marker recognition unit (149), a lane marker storage device (130A) and a level difference recognition processor (148),
wherein the lane marker recognition unit (149) recognizes a lane marker image (WL) indicating a lane marker on the side of the lane, based on a change of luminance in the captured image acquired by one of the imaging devices (110A, 110B),
wherein the lane marker storage device (130A) stores position information of the lane marker image (WL-S) previously recognized by the lane marker recognition unit (149),
wherein the level difference recognition processor (148) executes level difference recognition processing,
the difference recognition processor (148) executing the following steps:
selecting one or more specific level difference image areas (EL, CL) from the candidate set of level difference image areas (EL-C, CL-C), based on relative position of the level difference image areas (EL, CL) to the lane marker (WL) currently recognized by the lane marker recognition unit (149), when the lane marker recognition unit (149) recognizes the lane marker (WL), to output the one or more selected level difference image areas (EL, CL); and
selecting one or more specific level difference image areas (EL, CL) from the candidate set of level difference image areas (EL-C, CL-C) wherein a virtual lane marker image (WL') is generated at the position defined by the position information of the lane marker (WL-S) previously recognized, and wherein the one or more specific level difference image areas (EL, CL) are further selected by restricting the candidate set of level difference image areas (EL-C, CL-C) within a specified area based on the relative position to the virtual lane marker image (WL'), when the lane marker recognition unit (149) does not recognize the lane marker image (WL) to output the one or more selected level difference areas (EL, CL).

## Patentansprüche

1. Niveauunterschiedserkennungssystem (1), um einen oder mehrere Niveauunterschiedsbereiche (EL, CL), die einen oder mehrere Niveauunterschiede an mindestens einer Seite einer Fahrspur anzeigen, zu erkennen, wobei der Niveauunterschied eine Bordsteinkante oder einen Mittelstreifen entlang der Seite der Fahrspur, in der sich das Fahrzeug (100) bewegt, repräsentiert und das Niveauunterschiedserkennungssystem (19) funktionstechnisch mit Bilderzeugungseinrichtungen (110A, 110B) verbunden ist, um ein Bild eines Bereichs vor dem Fahrzeug (100) aufzunehmen,
wobei das Niveauunterschiedserkennungssystem (1) Folgendes umfasst:
eine Bildextraktionseinrichtung (400), die konfiguriert ist, einen Kandidatensatz von Niveauunterschiedsbildbereichen (EL-C, CL-C), die den Niveauunterschied an der Seite der Spur repräsentieren, auf der Grundlage des aufgenommenen Bildes, das durch die Bilderzeugungseinrichtungen (110A, 110B) erfasst wurde, zu extrahieren, wobei
die Bildextraktionseinrichtung (400) eine Leuchtdichtenbildkantenextraktionseinrichtung (145), eine Parallaxenberechnungseinrichtung (121), eine Parallaxenbildkantenextraktionseinrichtung, eine Straßenoberflächenerkennungseinheit und eine Berechnungseinrichtung (153) für geradlinige Kanten umfasst,
die Leuchtdichtenbildkantenextraktionseinrichtung konfiguriert ist, ein Leuchtdichtenkantenbild durch Extrahieren von Kantenbereichen in einem aufgenommenen Bild, das durch eine der Bilderzeugungseinrichtungen (110A, 110B) erfasst wurde, zu erzeugen,
die Parallaxenberechnungseinrichtung konfiguriert ist, ein Parallaxenbild zu erzeugen, wobei die Parallaxe für einen bestimmten Bildbereich als eine Positionsabweichung in dem bestimmten Bildbereich in einem Vergleichsbild, das mit dem bestimmten Bildbereich in einem Referenzbild in Beziehung steht, berechnet wird, wenn ein aufgenommenes Bild, das durch eine der Bilderzeugungseinrichtungen (110A, 110B) erfasst wurde, als das Referenzbild festgelegt wird und das andere aufgenommene Bild, das durch die andere der Bilderzeugungseinrichtungen (110A, 110B) erfasst wurde, als das Vergleichsbild festgelegt wird;
die Parallaxenbildkantenextraktionseinrichtung konfiguriert ist, ein Parallaxenkantenbild durch Extrahieren von Kantenbereichen in dem Parallaxenbild zu erzeugen,
die Straßenoberflächenerkennungseinheit konfiguriert ist, die Straßenoberfläche auf der Grundlage einer V-Disparitätskarte, die aus dem Parallaxenbild berechnet wurde, zu erkennen,
die Berechnungseinrichtung (153) für geradlinige Kanten konfiguriert ist, den einen oder die mehreren Bildbereiche mit einer geradlinigen Kante durch Extrahieren geradliniger Kanten in einem Kantenbild, das durch Kombinieren des Leuchtdichtenkantenbildes und des Parallaxenkantenbildes gebildet wurde, zu identifizieren, wobei das Parallaxenbild ferner derart eingeschränkt ist, dass die Kantenbereiche, die in der erkannten Straßenoberfläche enthalten sind, behalten werden, und
die Bildextraktionseinrichtung (400) konfiguriert ist, die identifizierten Bilder mit einer geradlinigen Kante als den Kandidatensatz von Niveauunterschiedsbildbereichen (EL-C, CL-C) zu extrahieren;
eine Spurmarkierungserkennungseinheit, die konfiguriert ist, ein Spurmarkierungsbild (WL), das eine Spurmarkierung an der Seite der Spur anzeigt, auf der Grundlage einer Änderung der Leuchtdichte in dem aufgenommenen Bild, das durch eine der Bilderzeugungseinrichtungen erfasst wurde, zu erkennen;
eine Spurmarkierungsspeichereinrichtung, die konfiguriert ist, Positionsinformationen des Spurmarkierungsbildes (WL-S), die zuvor durch die Spurmarkierungserkennungseinheit erkannt wurden, zu speichern; und
einen Niveauunterschiedserkennungsprozessor (148), der konfiguriert ist, eine Niveauunterschiedserkennungsverarbeitung auszuführen,
wobei der Niveauunterschiedserkennungsprozessor (148) konfiguriert ist zum:
Auswählen eines oder mehrerer bestimmter Niveauunterschiedsbildbereiche (EL, CL) aus dem Kandidatensatz von Niveauunterschiedsbildbereichen (EL-C, CL-C) auf der Grundlage einer Relativposition der Niveauunterschiedsbildbereiche (EL, CL) zu der Spurmarkierung (WL), die aktuell durch die Spurmarkierungserkennungseinheit (149) erkannt wird, wenn die Spurmarkierungserkennungseinheit (149) die Spurmarkierung (WL) erkennt, um den einen oder die mehreren ausgewählten Niveauunterschiedsbildbereiche (EL, CL) auszugeben; und
Auswählen eines oder mehrerer bestimmter Niveauunterschiedsbildbereiche (EL, CL) aus dem Kandidatensatz von Niveauunterschiedsbildbereichen (EL-C, CL-C), wobei ein virtuelles Spurmarkierungsbild (WL') bei der Position, die durch die Positionsinformationen der zuvor erkannten Spurmarkierung (WL-S) definiert ist, erzeugt wird und der eine oder die mehreren bestimmten Niveauunterschiedsbildbereiche (EL, CL) ferner durch Begrenzen des Kandidatensatzes von Niveauunterschiedsbildbereichen (EL-C, CL-C) in einem bestimmten Bereich auf der Grundlage der Relativposition zu dem virtuellen Spurmarkierungsbild (WL') ausgewählt werden, wenn die Spurmarkierungserkennungseinheit (149) das Spurmarkierungsbild (WL) nicht erkennt, um den einen oder die mehreren ausgewählten Niveauunterschiedsbildbereiche (EL, CL) auszugeben.

2. Niveauunterschiedserkennungssystem (1) nach Anspruch 1, das ferner eine Fluchtpunktberechnungseinheit (152) umfasst, die funktionstechnisch mit der Spurmarkierungserkennungseinheit (149) und dem Niveauunterschiedserkennungsprozessor (148) verbunden ist,
wobei dann, wenn die Spurmarkierungserkennungseinheit (149) den Spurmarkierungsbereich (WL) nicht erkennt, der Niveauunterschiedserkennungsprozessor (148-B) Positionsinformationen eines virtuellen Spurmarkierungsbildes (WL', WLa, WLb) auf der Grundlage der Positionsinformationen des letzten des Spurmarkierungsbildes (WL-S), das in der Spurmarkierungsspeichereinrichtung (130A) gespeichert ist, erzeugt, die Fluchtpunktberechnungseinrichtung 152 die Fluchtpunkte der virtuellen Spurmarkierungsbilder (WLa, WLb) auf der Grundlage der Positionsinformationen des letzten Spurmarkierungsbildes (WL-S) identifiziert und dann der Niveauunterschiedserkennungsprozessor (148) ein Bild des Kandidatensatzes von Niveauunterschiedsbildbereichen (EL-C, EL-C) mit einer geradlinigen Kante, dessen verlängerte Linie durch einen bestimmten Bereich, der die Fluchtpunkte der Spurmarkierungsbilder (WLa und WLb) umgibt, verläuft, als einen oder mehrere Niveauunterschiedsbildbereiche (EL, CL) erkennt.

3. Niveauunterschiedserkennungssystem (1) nach Anspruch 1, das ferner Folgendes umfasst:
eine Niveauunterschiedspositionsspeichereinrichtung (130B), die konfiguriert ist, Positionsinformationen des Niveauunterschieds (EL-S, CL-S), der zuvor durch den Niveauunterschiedserkennungsprozessor (148) erkannt worden ist, zu speichern, wobei
dort, wo die Spurmarkierungserkennungseinheit (149) den Spurmarkierungsbereich (WL) nicht erkennt, der Niveauunterschiedserkennungsprozessor (148) Positionsinformationen von einem virtuellen Spurmarkierungsbild (WL') auf der Grundlage der Positionsinformationen des letzten Spurmarkierungsbildes (WL-S), das in der Spurmarkierungsspeichereinrichtung (130B) gespeichert ist, erzeugt und einen virtuellen Kandidatensatz von Niveauunterschiedsbildbereichen (EL'-C, CL'-C) auf der Grundlage der Relativposition des virtuellen Spurmarkierungsbildes (WL') berechnet, und
dann, wenn Positionsinformationen des virtuellen Kandidatensatzes von Niveauunterschiedsbildbereichen (EL'-C, CL'-C) im Einklang mit Positionsinformationen des letzten Niveauunterschiedsbildbereichs (EL-S, CL-S), die in der Niveauunterschiedsspeichereinrichtung (130B) gespeichert sind, sind, der Niveauunterschiedserkennungsprozessor (148) den virtuellen Kandidatensatz von Niveauunterschiedsbildbereichen (EL'-C, CL'-C) als den Niveauunterschiedsbildbereich (EL, CL) ausgibt.

4. Niveauunterschiedserkennungssystem (1) nach einem der Ansprüche 1 bis 4, wobei dann, wenn die Bildextraktionseinrichtung (400) mehrere Kandidatensätze von Niveauunterschiedsbildbereichen extrahiert, der Niveauunterschiedserkennungsprozessor (148) den Kandidatensatz von Niveauunterschiedsbildbereichen, der am nächsten zu dem Fahrzeug (100) liegt, als den Niveauunterschiedsbildbereich (EL, CL) erkennt.

5. Niveauunterschiedserkennungssystem (1) nach einem der Ansprüche 1 bis 4, das ferner die Bilderzeugungseinrichtungen (110A, 110B), die funktionell mit der Bildextraktionseinrichtung (400) verbunden sind, umfasst.

6. Verfahren zum Erkennen einer oder mehrerer Niveauunterschiedsflächen (EE, CL), das einen oder mehrere Niveauunterschiede an mindestens einer Seite einer Fahrspur angibt, wobei der Niveauunterschied eine Bordsteinkante oder einen Mittelstreifen entlang der Seite der Fahrspur, in der sich das Fahrzeug bewegt, repräsentiert und das Verfahren durch ein Niveauunterschiedserkennungssystem (1) ausgeführt wird und funktionstechnisch an Bilderzeugungseinrichtungen gekoppelt ist, um Bilder eines Bereichs vor dem Fahrzeug aufzunehmen, wobei das Verfahren die folgenden Schritte umfasst:
Aufnehmen von Bilder des Bereichs vor dem Fahrzeug (100),
Extrahieren eines Kandidatensatzes von Niveauunterschiedsbildbereichen (EL-C, CL-C), die den Niveauunterschied an der Seite der Spur repräsentieren, auf der Grundlage der aufgenommenen Bilder, die durch die Bilderzeugungseinrichtungen erfasst wurden, wobei
das Extrahieren durch eine Bildextraktionseinrichtung (400) durchgeführt wird, die eine Leuchtdichtenbildkantenextraktionseinrichtung (145), eine Parallaxenberechnungseinrichtung (121), eine Parallaxenbildkantenextraktionseinrichtung, eine Straßenoberflächenerkennungseinheit und eine Berechnungseinrichtung (153) für geradlinige Kanten umfasst,
die Leuchtdichtenbildkantenextraktionseinrichtung (145) ein Leuchtdichtenkantenbild durch Extrahieren von Kantenbereichen in einem aufgenommenen Bild, das durch eine der Bilderzeugungseinrichtungen (110A, 110B) erfasst wurde, erzeugt,
die Parallaxenberechnungseinrichtung (121) ein Parallaxenbild erzeugt, wobei die Parallaxe für einen bestimmten Bildbereich als eine Positionsabweichung in dem bestimmten Bildbereich in einem Vergleichsbild, das mit dem bestimmten Bildbereich in einem Referenzbild in Beziehung steht, berechnet wird, wenn ein aufgenommenes Bild, das durch eine der Bilderzeugungseinrichtungen (110A, 110B) erfasst wurde, als das Referenzbild festgelegt wird und das andere aufgenommene Bild, das durch die andere der Bilderzeugungseinrichtungen (110A, 110B) erfasst wurde, als das Vergleichsbild festgelegt wird,
die Parallaxenbildkantenextraktionseinrichtung ein Parallaxenkantenbild durch Extrahieren von Kantenbereichen in dem Parallaxenbild erzeugt,
die Straßenoberflächenerkennungseinheit die Straßenoberfläche auf der Grundlage einer V-Disparitätskarte, die aus dem Parallaxenbild berechnet wurde, erkennt,
die Berechnungseinrichtung (153) für geradlinige Kanten einen oder mehrere Bildbereiche mit einer geradlinigen Kante durch Extrahieren geradliniger Kanten in einem Kantenbild, das durch Kombinieren des Leuchtdichtenkantenbildes und des Parallaxenkantenbildes gebildet wurde, identifiziert, wobei das Parallaxenbild ferner derart eingeschränkt ist, dass die Kantenbereiche, die in der erkannten Straßenoberfläche enthalten sind, behalten werden,
die Bildextraktionseinrichtung (400) die identifizierten Bilder mit einer geradlinigen Kante als den Kandidatensatz von Niveauunterschiedsbildbereichen (EL-C, CL-C) extrahiert, und
das Niveauunterschiedserkennungssystem (1) eine Spurmarkierungserkennungseinheit (149), eine Spurmarkierungsspeichereinrichtung (130A) und einen Niveauunterschiedserkennungsprozessor (148) umfasst, wobei
die Spurmarkierungserkennungseinheit (149) ein Spurmarkierungsbild (WL), das eine Spurmarkierung an der Seite der Spur anzeigt, auf der Grundlage einer Änderung der Leuchtdichte in dem aufgenommenen Bild, das durch eine der Bilderzeugungseinrichtungen (110A, 110B) erfasst wurde, erkennt,
die Spurmarkierungsspeichereinrichtung (130A) Positionsinformationen des Spurmarkierungsbildes (WL-S), die zuvor durch die Spurmarkierungserkennungseinheit (149) erkannt wurden, speichert und
der Niveauunterschiedserkennungsprozessor (148) eine Niveauunterschiedserkennungsverarbeitung ausführt,
wobei der Niveauunterschiedserkennungsprozessor (148) die folgenden Schritte ausführt:
Auswählen eines oder mehrerer bestimmter Niveauunterschiedsbildbereiche (EL, CL) aus dem Kandidatensatz von Niveauunterschiedsbildbereichen (EL-C, CL-C) auf der Grundlage einer Relativposition der Niveauunterschiedsbildbereiche (EL, CL) zu der Spurmarkierung (WL), die aktuell durch die Spurmarkierungserkennungseinheit (149) erkannt wird, wenn die Spurmarkierungserkennungseinheit (149) die Spurmarkierung (WL) erkennt, um den einen oder die mehreren ausgewählten Niveauunterschiedsbildbereiche (EL, CL) auszugeben; und
Auswählen eines oder mehrerer bestimmter Niveauunterschiedsbildbereiche (EL, CL) aus dem Kandidatensatz von Niveauunterschiedsbildbereichen (EL-C, CL-C), wobei ein virtuelles Spurmarkierungsbild (WL') bei der Position, die durch die Positionsinformationen der zuvor erkannten Spurmarkierung (WL-S) definiert ist, erzeugt wird und der eine oder die mehreren bestimmten Niveauunterschiedsbildbereiche (EL, CL) ferner durch Begrenzen des Kandidatensatzes von Niveauunterschiedsbildbereichen (EL-C, CL-C) in einem bestimmten Bereich auf der Grundlage der Relativposition zu dem virtuellen Spurmarkierungsbild (WL') ausgewählt werden, wenn die Spurmarkierungserkennungseinheit (149) das Spurmarkierungsbild (WL) nicht erkennt, um den einen oder die mehreren ausgewählten Niveauunterschiedsbildbereiche (EL, CL) auszugeben.

## Revendications

1. Système de reconnaissance de différence de niveau (1), pour reconnaître au moins une zone d'image de différence de niveau (EL, CL) indiquant au moins une différence de niveau sur au moins un côté d'une voie de véhicule, la différence de niveau représentant un trottoir ou un terre-plein central sur le côté de la voie de véhicule dans laquelle le véhicule (100) se déplace et le système de reconnaissance de différence de niveau (19) étant relié de manière fonctionnelle aux dispositifs d'imagerie (110A, 110B) pour capturer une image d'une zone devant le véhicule (100),
le système de reconnaissance de différence de niveau (1) comprenant :
un extracteur d'image (400) conçu pour extraire un ensemble candidat de zones d'image de différence de niveau (EL-C, CL-C) représentant la différence de niveau du côté de la voie, en fonction de l'image capturée acquise par les dispositifs d'imagerie (110A, 110B),
l'extracteur d'image (400) comprenant un extracteur de bord d'image de luminance (145), un calculateur de parallaxe (121), un extracteur de bord d'image de parallaxe, une unité de reconnaissance de revêtement routier et un calculateur de bord linéaire (153),
l'extracteur de bord d'image de luminance étant conçu pour générer une image de bord de luminance par extraction de zones de bord dans une image capturée acquise par un des dispositifs d'imagerie (110A, 110B),
le calculateur de parallaxe étant conçu pour générer une image de parallaxe, la parallaxe pour une certaine zone d'image étant calculée en tant qu'écart de position dans ladite certaine zone d'image dans une image de comparaison corrélée à ladite certaine zone d'image dans une image de référence, lorsqu'une image capturée acquise par un des dispositifs d'imagerie (110A, 110B) est définie comme image de référence et l'autre image capturée acquise par l'autre des dispositifs d'imagerie (110A, 110B) est définie comme image de comparaison ;
l'extracteur de bord d'image de parallaxe étant conçu pour générer une image de bord de parallaxe par extraction de zones de bord dans l'image de parallaxe,
l'unité de reconnaissance de revêtement routier étant conçue pour reconnaître le revêtement routier en fonction d'une carte de disparités V calculée à partir de l'image de parallaxe,
le calculateur de bord linéaire (153) étant conçu pour identifier l'au moins une zone d'image de bord linéaire par extraction de bords linéaires dans une image de bord formée par combinaison de l'image de bord de luminance et de l'image de bord de parallaxe, l'image de parallaxe étant en outre limitée pour conserver les zones de bord contenues dans le revêtement routier reconnu,
l'extracteur d'image (400) étant conçu pour extraire les images de bord linéaire identifiées en tant qu'ensemble candidat de zones d'image de différence de niveau (EL-C, CL-C) ; et
une unité de reconnaissance de marquage de voie conçue pour reconnaître une image de marquage de voie (WL) indiquant un marquage de voie sur le côté de la voie, en fonction d'un changement de luminance dans l'image capturée acquise par un des dispositifs d'imagerie ;
un dispositif de stockage de marquage de voie conçu pour stocker des informations de position de l'image de marquage de voie (WL-S) reconnu précédemment par l'unité de reconnaissance de marquage de voie ;
un processeur de reconnaissance de différence de niveau (148) conçu pour effectuer un traitement de reconnaissance de différence de niveau,
le processeur de reconnaissance de différence de niveau (148) étant conçu pour :
sélectionner au moins une zone d'image de différence de niveau spécifique (EL, CL) à partir de l'ensemble candidat de zones d'image de différence de niveau (EL-C, CL-C), en fonction d'une position relative des zones d'image de différence de niveau (EL, CL) par rapport au marquage de voie (WL) actuellement reconnu par l'unité de reconnaissance de marquage de voie (149), lorsque l'unité de reconnaissance de marquage de voie (149) reconnaît le marquage de voie (WL), pour émettre l'au moins une zone d'image de différence de niveau sélectionnée (EL, CL) ; et
sélectionner au moins une zone d'image de différence de niveau spécifique (EL, CL) à partir de l'ensemble candidat de zones d'image de différence de niveau (EL-C, CL-C), une image de marquage de voie virtuel (WL') étant générée dans la position définie par les informations de position du marquage de voie (WL-S) précédemment reconnu, et l'au moins une zone d'image de différence de niveau spécifique (EL, CL) étant en outre sélectionnée en limitant l'ensemble candidat de zones d'images de différence de niveau (EL-C, CL-C) à l'intérieur d'une zone spécifique en fonction de la position relative par rapport à l'image de marquage de voie virtuel (WL'), lorsque l'unité de reconnaissance de marquage de voie (149) ne reconnaît pas l'image de marquage de voie (WL), pour émettre l'au moins une zone de différence de niveau sélectionnée (EL,CL).

2. Système de reconnaissance de différence de niveau (1) selon la revendication 1, comprenant en outre un calculateur de point de fuite (152), relié de manière fonctionnelle à l'unité de reconnaissance de marquage de voie (149) et au processeur de reconnaissance de différence de niveau (148),
dans lequel, lorsque l'unité de reconnaissance de marquage de voie (149) ne reconnaît pas la zone de marquage de voie (WL), le processeur de reconnaissance de différence de niveau (148-B) génère des informations de position d'une image de marquage de voie virtuel (WL', WLa, WLb) en fonction des informations de position de la dernière image de marquage de voie (WL-S) stockée dans le dispositif de stockage de marquage de voie (130A), le calculateur de point de fuite (152) identifiant les points de fuite des images de marquage de voie virtuel (WLa, WLb) en fonction des informations de position de la dernière image de marquage de voie (WL-S), et ensuite le processeur de reconnaissance de différence de niveau (148) reconnaît une image de bord linéaire, dont une ligne étendue passe par une certaine plage entourant les points de fuite des images de marquage de voie (WLa et WLb), de l'ensemble candidat de zones d'image de différence de niveau (EL-C, CL-C), en tant qu'au moins une zone d'image de différence de niveau (EL, CL).

3. Système de reconnaissance de différence de niveau (1) selon la revendication 1, comprenant en outre :
un dispositif de stockage de position de différence de niveau (130B) conçu pour stocker des informations de position de la différence de niveau (EL-S, CL-S) précédemment reconnue par le processeur de reconnaissance de différence de niveau (148),
dans lequel, là où l'unité de reconnaissance de marquage de voie (149) ne reconnaît pas la zone de marquage de voie (WL), le processeur de reconnaissance de différence de niveau (148) génère des informations de position d'une image de marquage de voie virtuel (WL') en fonction des informations de position de la dernière image de marquage de voie (WL-S) stockées dans le dispositif de stockage de marquage de voie (130B) et calcule un ensemble candidat virtuel de zones d'image de différence de niveau (EL'-C, CL'-C) en fonction de la position relative de l'image de marquage de voie virtuel (WL'), et
lorsque les informations de position de l'ensemble candidat virtuel de zones d'image de différence de niveau (EL'-C, CL'-C) est conforme à des informations de position de la dernière zone d'image de différence de niveau (EL-S, CL-S) stockées dans le dispositif de stockage de position de différence de niveau (130B), le processeur de reconnaissance de différence de niveau (148) émet l'ensemble candidat virtuel de zones d'image de différence de niveau (EL'-C, CL'-C) en tant que zone d'image de différence de niveau (EL, CL).

4. Système de reconnaissance de différence de niveau (1) selon l'une quelconque des revendications 1 à 4, dans lequel, lorsque l'extracteur d'image (400) extrait de multiples ensembles candidats de zones d'image de différence de niveau, le processeur de reconnaissance de différence de niveau (148) reconnaît l'ensemble candidat de zones d'image de différence de niveau le plus proche du véhicule (100) en tant que zone d'image de différence de niveau (EL, CL).

5. Système de reconnaissance de différence de niveau (1) selon l'une quelconque des revendications 1 à 4, comprenant en outre les dispositifs d'imagerie (110A, 110B) reliés de manière fonctionnelle à l'extracteur d'image (400).

6. Procédé de reconnaissance d'au moins une zone de différence de niveau (EE, CL), indiquant au moins une différence de niveau sur au moins un côté d'une voie de véhicule, la différence de niveau représentant un trottoir ou un terre-plein central sur le côté de la voie de véhicule dans laquelle le véhicule se déplace et le procédé étant effectué par un système de reconnaissance de différence de niveau (1) et relié de manière fonctionnelle aux dispositifs d'imagerie pour capturer des images d'une zone devant le véhicule, le procédé comprenant les étapes de :
capture d'images de la zone devant le véhicule (100),
extraction d'un ensemble candidat de zones d'image de différence de niveau (RL-C, CL-C) représentant la différence de niveau du côté de la voie, en fonction des images capturées acquises par les dispositifs d'imagerie,
l'extraction étant effectuée par un extracteur d'image (400) comprenant un extracteur de bord d'image de luminance (145), un calculateur de parallaxe (121), un extracteur de bord d'image de parallaxe, une unité de reconnaissance de revêtement routier et un calculateur de bord linaire (153),
l'extracteur de bord d'image de luminance (145) générant une image de bord de luminance par extraction de zones de bord dans une image capturée acquise par un des dispositifs d'imagerie (110A, 110B),
le calculateur de parallaxe (121) générant une image de parallaxe, la parallaxe pour une certaine zone d'image étant calculé en tant qu'écart de position dans ladite certaine zone d'image dans une image de comparaison corrélée à ladite certaine zone d'image dans une image de référence, lorsqu'une image capturée acquise par un des dispositifs d'imagerie (110A, 110B) est définie comme image de référence et l'autre image capturée acquise par l'autre des dispositifs d'imagerie (110A, 110B) est définie comme image de comparaison,
l'extracteur de bord d'image de parallaxe générant une image de bord de parallaxe par extraction de zones de bord dans l'image de parallaxe,
l'unité de reconnaissance de revêtement routier reconnaissant le revêtement routier en fonction d'une carte de disparités V calculée à partir de l'image de parallaxe,
le calculateur de bord linéaire (153) identifiant au moins une zone d'image de bord linéaire par extraction de bords linéaires dans une image de bord formée par combinaison de l'image de bord de luminance et de l'image de bord de parallaxe, l'image de parallaxe étant en outre limitée pour conserver les zones de bord contenues dans le revêtement routier reconnu,
l'extracteur d'image (400) extrayant les images de bord linéaire identifiées en tant qu'ensemble candidat de zones d'image de différence de niveau (EL-C, CL-C),
le système de reconnaissance de différence de niveau (1) comprenant une unité de reconnaissance de marquage de voie (149), un dispositif de stockage de marquage de voie (130A) et un processeur de reconnaissance de différence de niveau (148),
l'unité de reconnaissance de marquage de voie (149) reconnaissant une image de marquage de voie (WL) indiquant un marquage de voie sur le côté de la voie, en fonction d'un changement de luminance dans l'image capturée acquise par un des dispositifs d'imagerie (110A, 110B),
le dispositif de stockage de marquage de voie (130A) stockant des informations de position de l'image de marquage de voie (WL-S) reconnu précédemment par l'unité de reconnaissance de marquage de voie (149),
le processeur de reconnaissance de différence de niveau (148) effectuant un traitement de reconnaissance de différence de niveau,
le processeur de reconnaissance de différence (148) effectuant les étapes suivantes :
sélection d'au moins une zone d'image de différence de niveau spécifique (EL, CL) à partir de l'ensemble candidat de zones d'image de différence de niveau (EL-C, CL-C), en fonction d'une position relative de zones d'image de différence de niveau (EL, CL) par rapport au marquage de voie (WL) actuellement reconnu par l'unité de reconnaissance de marquage de voie (149), lorsque l'unité de reconnaissance de marquage de voie (149) reconnaît le marquage de voie (WL), pour émettre l'au moins une zone d'image de différence de niveau sélectionnée (EL, CL) ; et
sélection d'au moins une zone d'image de différence de niveau spécifique (EL, CL) à partir de l'ensemble candidat de zones d'image de différence de niveau (EL-C, CL-C), une image de marquage de voie virtuel (WL') étant générée dans la position définie par les informations de position du marquage de voie (WL-S) précédemment reconnu, et l'au moins une zone d'image de différence de niveau spécifique (EL, CL) étant en outre sélectionnée en limitant l'ensemble candidat de zones d'image de différence de niveau (EL-C, CL-C) dans une zone spécifiée en fonction de la position relative par rapport à l'image de marquage de voie virtuel (WL'), lorsque l'unité de reconnaissance de marquage de voie (149) ne reconnaît pas l'image de marquage de voie (WL) pour émettre l'au moins une zone de différence de niveau sélectionnée (EL,CL).
